# FASCICULE DE BREVET EUROPEEN

(11) **EP 3 301 344 B1**
(45) Date de publication et mention de la délivrance du brevet: **26.06.2019**
(21) Numéro de dépôt: 17190617.5
(22) Date de dépôt: 12.09.2017
(51) Int. Cl.: F16L 57/00, F16L 55/168, F16L 55/07, G01M 3/04, G01M 3/14, G01M 3/28, F16K 27/12

(54) **DISPOSITIF DE RACCORDEMENT COMPRENANT UN MANCHON SOUPLE POUR COLLECTER UN LIQUIDE EN CAS DE FUITE OU DE SUINTEMENT**
ANSCHLUSSVORRICHTUNG, DIE EINE FLEXIBLE MUFFE ZUM SAMMELN EINER FLÜSSIGKEIT IM FALLE EINES LECKS ODER AUSSICKERNS UMFASST
CONNECTION DEVICE COMPRISING A FLEXIBLE SLEEVE FOR COLLECTING A LIQUID IN THE EVENT OF LEAKAGE OR SEEPAGE

(30) Priorité: 29.09.2016 FR 1659318
(43) Date de publication de la demande: 04.04.2018
(73) Titulaire: Airbus Operations S.A.S., 31060 Toulouse (FR)
(72) Inventeur: MILLET, Gérard, 31820 PIBRAC (FR); ALQUIER, Bruno, 31700 BLAGNAC (FR); MENAGE, Thomas, 31770 COLOMIERS (FR)
(74) Mandataire: Gicquel, Olivier Yves Gérard

(56) Documents cités:
- WO-A1-96/00361
- DE-U1- 29 818 853
- GB-A- 2 274 919
- US-A- 4 295 669
- US-A- 6 164 345

## Description

La présente demande se rapporte à un dispositif de raccordement comprenant un manchon souple pour collecter un liquide en cas de fuite ou de suintement. Un tel dispositif est déjà connu du document US 4,295,669.

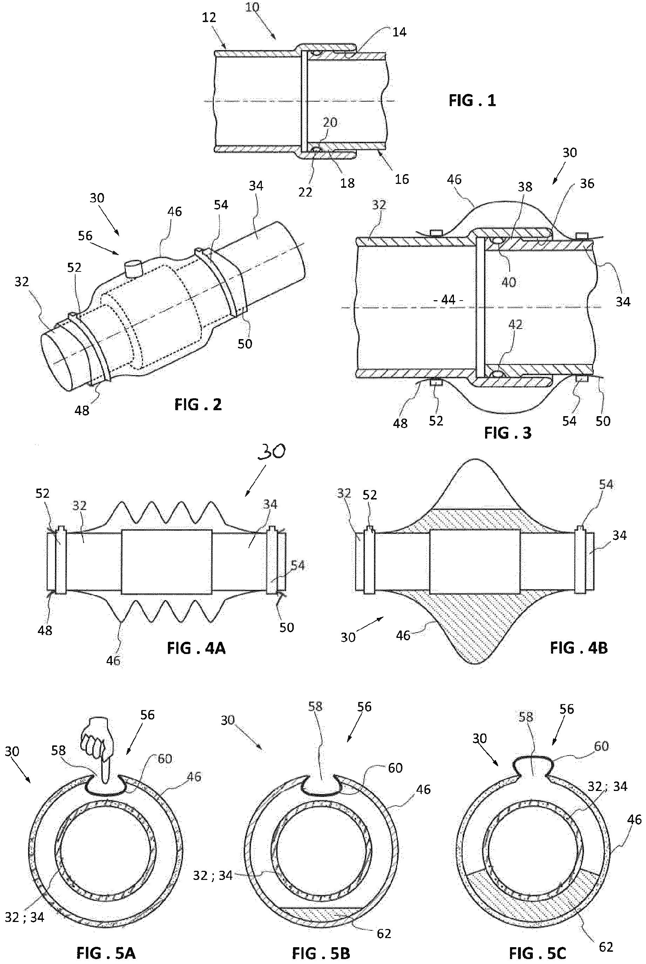

Selon un mode de réalisation de l'art anterieur visible sur la figure 1, un dispositif de raccordement 10 de type dynamique comprend :
- un premier conduit 12, appelé également conduit femelle qui comporte un logement 14 à une de ses extrémités,
- un deuxième conduit 16 appelé également conduit mâle qui comporte à une de ses extrémités une tête 18 configurée pour se loger dans le logement 14 du premier conduit et une gorge 20 qui s'étend sur toute la circonférence de la surface extérieure de la tête 18,
- un joint annulaire 22 qui se loge dans la gorge 20 et qui est comprimé entre la gorge 20 de la tête du deuxième conduit 16 et la paroi du logement 14 du premier conduit 12.

En fonctionnement, les premier et deuxième conduits ont des sections circulaires et ont des axes confondus.

Pour la suite de la description, la direction longitudinale est parallèle à l'axe du premier conduit. Un plan longitudinal contient l'axe du premier conduit. Un plan transversal est un plan perpendiculaire au premier conduit.

Selon un premier mode de réalisation, le dispositif de raccordement et les conduits sont positionnés à l'intérieur de conduits extérieurs rigides pour collecter et drainer vers un point donné le liquide en cas de fuite au niveau du dispositif de raccordement.

Selon un deuxième mode de réalisation, un caisson central de voilure d'un aéronef dans lequel sont positionnés plusieurs dispositifs de raccordement est rendu étanche pour collecter le liquide en cas de fuite au niveau de l'un des dispositifs de raccordement et éviter la propagation du liquide à d'autres zones. Ce deuxième mode de réalisation permet de supprimer les conduits extérieurs et de réduire par conséquent la masse embarquée. Toutefois, en cas de suintement au niveau de l'un des dispositifs de raccordement, l'aéronef doit être immobilisé au sol pour être réparé.

La présente invention vise à remédier aux inconvénients de l'art antérieur.

A cet effet, l'invention a pour objet un dispositif de raccordement comprenant un premier conduit, un deuxième conduit et une zone de jonction entre les premier et deuxième conduits, caractérisé en ce que le dispositif de raccordement comprend :
- un manchon souple qui comporte une première extrémité configurée pour recouvrir une partie du premier conduit et une deuxième extrémité configurée pour recouvrir une partie du deuxième conduit,
- un premier système de serrage configuré pour enserrer la première extrémité du manchon souple autour du premier conduit,
- un deuxième système de serrage configuré pour enserrer la deuxième extrémité du manchon souple autour du deuxième conduit,
- les premier et deuxième systèmes de serrage étant disposés de part et d'autre de la zone de jonction.

Selon l'invention, le manchon souple permet de collecter un liquide en cas de fuite ou de suintement au niveau de la zone de jonction entre les premier et deuxième conduits et d'éviter que le liquide ne se répande à l'extérieur du manchon souple. Ainsi, en cas de suintement, l'aéronef n'est pas nécessairement immobilisé au sol. Selon un autre avantage, le manchon souple forme une barrière afin de protéger des impuretés la zone de jonction entre les premier et deuxième conduits.

Selon l'invention, le dispositif de raccordement comprend un indicateur de remplissage.

Selon l'invention, le manchon souple comprend un premier orifice configuré pour faire communiquer l'intérieur du manchon souple avec l'extérieur et l'indicateur de remplissage comprend une paroi circulaire déformable obturant le premier orifice, ladite paroi circulaire déformable étant mobile entre une position inactive dans laquelle la paroi circulaire déformable est logée à l'intérieur du manchon souple et une position active dans laquelle la paroi circulaire déformable est déployée à l'extérieur du manchon souple.

Selon une autre caractéristique, le premier orifice est positionné sur une partie sommitale du manchon souple.

Selon un mode de réalisation, la paroi circulaire déformable et/ou une liaison entre la paroi circulaire déformable et un bord du premier orifice ont une résistance mécanique configurée pour se rompre en cas de fuite importante.

Selon une autre caractéristique, le manchon souple comprend un deuxième orifice configuré pour faire communiquer l'intérieur du manchon souple avec l'extérieur, positionné en partie inférieure du manchon souple.

Selon une autre caractéristique, le deuxième orifice est obturé par un système de vidange configuré pour occuper un état bloqué dans lequel il empêche un écoulement de liquide à travers le deuxième orifice et un état passant dans lequel il permet un écoulement de liquide à travers le deuxième orifice.

Selon une autre caractéristique, le manchon souple comprend au moins un tronçon en forme de soufflet.

D'autres caractéristiques et avantages ressortiront de la description qui va suivre de l'invention, description donnée à titre d'exemple uniquement, en regard des dessins annexés sur lesquels :
- La figure 1 est une coupe longitudinale d'un dispositif de raccordement qui illustre un mode de réalisation de l'art antérieur,
- La figure 2 est une vue en perspective d'un dispositif de raccordement qui illustre un dispositif qui n'appartient pas à l'invention,
- La figure 3 est une coupe longitudinale d'un dispositif de raccordement qui illustre un dispositif qui n'appartient pas à l'invention,
- Les figures 4A et 4B sont des schémas d'un dispositif de raccordement qui n'appartient pas à l'invention, respectivement en l'absence d'une fuite et en présence d'une fuite,
- Les figures 5A à 5C sont des coupes transversales schématiques d'un dispositif de raccordement équipé d'un indicateur de remplissage qui illustrent un mode de réalisation de l'invention,
- La figure 6 est une vue en perspective d'un dispositif de raccordement équipé d'un système de vidange qui illustre un autre mode de réalisation de l'invention,
- Les figures 7A à 7D sont des schémas qui illustrent un mode opératoire pour mesurer le débit d'une fuite.

Sur les figures 2 et 3, on a représenté un dispositif de raccordement 30 entre un premier conduit 32 et un deuxième conduit 34. Selon une application, les premier et second conduits 32 et 34 forment une partie d'une canalisation de carburant d'un aéronef. Bien entendu, l'invention n'est pas limitée à cette application.

Le dispositif de raccordement est dynamique. Ainsi, en fonctionnement, au moins l'un des conduits 32, 34 peut bouger par rapport à l'autre conduit.

Selon un mode de réalisation, le premier conduit 32 comporte un logement 36 à une de ses extrémités et le deuxième conduit 34 comporte à une de ses extrémités une tête 38 configurée pour se loger dans le logement 36 du premier conduit 32 et une gorge 40 qui s'étend sur toute la circonférence de la surface extérieure de la tête 38.

Le dispositif de raccordement comprend également un joint annulaire 42 qui se loge dans la gorge 40 et qui est comprimé entre la gorge 40 de la tête 38 du deuxième conduit 34 et la paroi du logement 36 du premier conduit 32.

Selon un autre agencement qui ne appartient pas à l'objet de l'invention et qui n'est pas représenté, le dispositif de raccordement comprend :
- un manchon rigide qui comporte à chacune de ses extrémités un logement,
- deux conduits configurés pour s'emmancher aux extrémités du manchon et qui comportent chacun une tête avec une gorge dans laquelle se loge un joint annulaire. Quel que soit le mode de réalisation, le dispositif de raccordement comprend un premier conduit 32, un deuxième conduit 34 et une zone de jonction 44 entre les premier et deuxième conduits 32 et 34.

Selon une caractéristique de l'invention, le dispositif de raccordement comprend :
- un manchon souple 46 qui comporte une première extrémité 48 configurée pour recouvrir une partie du premier conduit 32 et une deuxième extrémité 50 configurée pour recouvrir une partie du deuxième conduit 34,
- un premier système de serrage 52 configuré pour enserrer la première extrémité 48 du manchon souple 46 autour du premier conduit 32,
- un deuxième système de serrage 54 configuré pour enserrer la deuxième extrémité 50 du manchon souple 46 autour du deuxième conduit 34,
- les premier et deuxième systèmes de serrage 52 et 54 étant disposés de part et d'autre de la zone de jonction 44.

Ainsi, le dispositif selon l'invention confère une étanchéité au liquide entre le premier conduit 32 et le manchon souple 46 ainsi qu'une étanchéité au liquide entre le deuxième conduit 34 e le manchon souple 46.

Selon l'invention, le manchon souple 46 permet de collecter un liquide en cas de fuite ou de suintement au niveau de la zone de jonction 44 et d'éviter que le liquide ne se répande à l'extérieur du manchon souple 46. Selon un autre avantage, le manchon souple 46 protège des impuretés le joint annulaire 42 et la paroi du logement 36 du premier conduit 32.

Pour réduire la masse embarquée, les premier et deuxième systèmes de serrage 52, 54 sont positionnés le plus proche possible de la zone de jonction 44.

Selon un mode de réalisation, chaque système de serrage 52, 54 est un collier de serrage, par exemple en matière plastique.

Le manchon souple 46 est déformable pour permettre aux premier et deuxième conduits 52, 54 de bouger l'un par rapport à l'autre afin que le dispositif de raccordement soit dynamique. Selon un mode de réalisation, le manchon souple 46 est réalisé en un matériau souple résistant au carburant, tel que par exemple du polytétrafluoroéthylène ou du néoprène.

Le manchon souple 46 est distendu entre les premier et deuxième systèmes de serrage 52, 54 pour pouvoir collecter un liquide en cas de fuite ou de suintement et pour permettre aux premier et deuxième conduits 52, 54 de bouger l'un par rapport à l'autre afin que le dispositif de raccordement soit dynamique.

Selon une configuration visible sur les figures 4A et 4B, le manchon souple 46 comprend au moins un tronçon en forme de soufflet. Cette configuration permet d'augmenter la capacité du manchon souple 46 à se déformer et le volume de stockage du liquide collecté, comme illustré sur la figure 4B.

Selon l'invention, le manchon souple 46 comprend un indicateur de remplissage 56, comme illustré sur les figures 5A à 5B.

Selon l'invention, cet indicateur de remplissage 56 est configuré pour occuper un premier état lorsque le volume de liquide emprisonné entre le manchon souple 46 et les premier et deuxième conduits 32, 34 est inférieur à un seuil donné et un second état lorsque le volume de liquide est supérieur ou égal au seuil donné.

Selon l'invention, le manchon souple 46 comprend un premier orifice 58 qui permet de faire communiquer l'intérieur du manchon souple 46 avec l'extérieur. L'indicateur de remplissage 56 comprend une paroi circulaire déformable 60 obturant le premier orifice 58. La paroi circulaire déformable 60 présente un diamètre supérieur au diamètre du premier orifice 58 et est reliée à la périphérie de celui-ci.

De préférence, le premier orifice 58 est positionné sur la partie sommitale du manchon souple 46 afin que la paroi circulaire déformable 60 soit en contact avec le gaz (généralement de l'air ambiant) présent dans le manchon souple 46 même en cas de fuite.

Cette paroi circulaire déformable 60 est mobile entre une position inactive (illustrée sur la figure 5A) dans laquelle la paroi circulaire déformable 60 est logée à l'intérieur du manchon souple 46 et une position active (illustrée sur la figure 5C) dans laquelle la paroi circulaire déformable 60 est déployée à l'extérieur du manchon souple 46.

Comme illustré sur la figure 5A, lors de la mise en place du manchon souple 46, la paroi circulaire déformable 60 est positionnée à l'intérieur du manchon souple 46, ce qui correspond au premier état de l'indicateur de remplissage 56.

En cas de fuite, le liquide 62 s'accumule à l'intérieur du manchon souple 46, en partie inférieure. Tant que le niveau du liquide 62 est inférieur au seuil donné, la paroi circulaire déformable 60 reste dans sa position inactive illustrée par la figure 5A car la pression à l'intérieur du manchon souple 46 n'est pas suffisante pour provoquer le déplacement de la paroi circulaire déformable 60 dans sa position active illustrée par la figure 5C.

Lorsque le niveau du liquide 62 atteint le seuil donné, la paroi circulaire déformable 60 se déploie dans sa position active illustrée par la figure 5C car la pression à l'intérieur du manchon souple 46 est suffisante pour provoquer le déplacement de la paroi circulaire déformable 60 à l'extérieur du manchon souple 46.

Selon une autre caractéristique, la paroi circulaire déformable 60 et/ou la liaison entre la paroi circulaire déformable 60 et le bord du premier orifice 58 ont une résistance mécanique configurée pour assurer une fonction de fusible et se rompre en cas de fuite importante.

Selon une autre caractéristique, le manchon souple 46 comprend un deuxième orifice 64 qui permet de faire communiquer l'intérieur du manchon souple 46 avec l'extérieur, positionné en partie inférieure du manchon souple 46 pour obtenir une vidange complète du manchon souple 46.

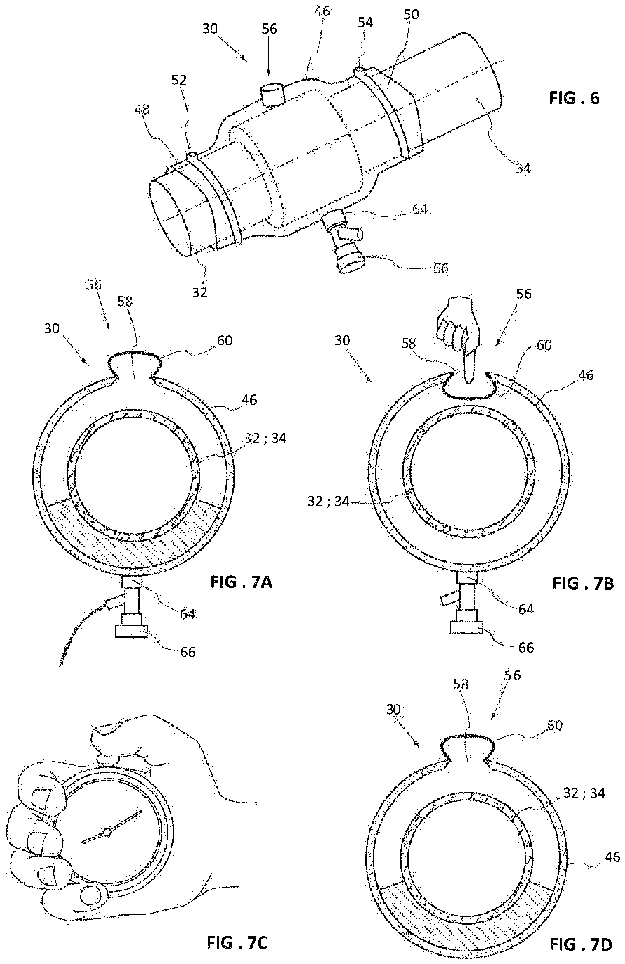

Ce deuxième orifice 64 peut être obturé par un bouchon ou par un système de vidange 66, comme par exemple une vanne visible sur les figures 6, 7A, 7B et 7D.

Ce système de vidange 66 est configuré pour occuper un état bloqué dans lequel il empêche un écoulement de liquide à travers le deuxième orifice 64 et un état passant dans lequel il permet un écoulement de liquide à travers le deuxième orifice 64.

Selon un mode opératoire illustré sur les figures 7A à 7D, l'indicateur de remplissage 56 et le système de vidange 66 sont utilisés pour déterminer un débit de la fuite.

Comme illustré sur la figure 7A, le système de vidange 66 est à l'état passant pour vider complètement le manchon souple 46.

Lorsque le manchon souple 46 est vide, la paroi circulaire déformable 60 de l'indicateur de remplissage 56 est repositionnée à l'intérieur du manchon souple 46 et le système de vidange 66 est à l'état bloqué, comme illustré sur la figure 7B.

Comme illustré sur la figure 7C, on mesure la durée, jusqu'au changement d'état de l'indicateur de remplissage 46, correspondant à la sortie de la paroi circulaire déformable 60 comme illustré sur la figure 7D.

Connaissant le volume de liquide nécessaire pour provoquer le changement d'état de l'indicateur de remplissage 56 et la sortie de la paroi circulaire déformable 60 en dehors du manchon souple 46 et la durée du changement d'état, il est possible de déterminer le débit de la fuite qui est égal au volume divisé par la durée.

## Revendications

1. Dispositif de raccordement comprenant un premier conduit (32), un deuxième conduit (34) et une zone de jonction (44) entre les premier et deuxième conduits (32, 34), le dispositif de raccordement comprenant en outre :
- un manchon souple (46) qui comporte une première extrémité (48) configurée pour recouvrir une partie du premier conduit (32), une deuxième extrémité (50) configurée pour recouvrir une partie du deuxième conduit (34) et un premier orifice (58) configuré pour faire communiquer l'intérieur du manchon souple (46) avec l'extérieur,
- un premier système de serrage (52) configuré pour enserrer la première extrémité (48) du manchon souple (46) autour du premier conduit (32),
- un deuxième système de serrage (54) configuré pour enserrer la deuxième extrémité (50) du manchon souple (46) autour du deuxième conduit (34),
- les premier et deuxième systèmes de serrage (52, 54) étant disposés de part et d'autre de la zone de jonction (44), et
- un indicateur de remplissage (56)
le dispositif étant **caractérisé en ce que** l'indicateur de remplissage (56) présente une paroi circulaire déformable (60) obturant le premier orifice (58), ladite paroi circulaire déformable (60) étant mobile entre une position inactive dans laquelle la paroi circulaire déformable (60) est logée à l'intérieur du manchon souple (46) et une position active dans laquelle la paroi circulaire déformable (60) est déployée à l'extérieur du manchon souple (46).

2. Dispositif de raccordement selon la revendication précédente, **caractérisé en ce que** le premier orifice (58) est positionné sur une partie sommitale du manchon souple (46).

3. Dispositif de raccordement selon l'une des revendications 1 à 2, **caractérisé en ce que** la paroi circulaire déformable (60) et/ou une liaison entre la paroi circulaire déformable (60) et un bord du premier orifice (58) ont une résistance mécanique configurée pour se rompre en cas de fuite importante.

4. Dispositif de raccordement selon l'une des revendications précédentes, **caractérisé en ce que** le manchon souple (46) comprend un deuxième orifice (64) configuré pour faire communiquer l'intérieur du manchon souple (46) avec l'extérieur, positionné en partie inférieure du manchon souple (46).

5. Dispositif de raccordement selon la revendication précédente, **caractérisé en ce que** le deuxième orifice (64) est obturé par un système de vidange (66) configuré pour occuper un état bloqué dans lequel il empêche un écoulement de liquide à travers le deuxième orifice (64) et un état passant dans lequel il permet un écoulement de liquide à travers le deuxième orifice (64).

6. Dispositif de raccordement selon l'une des revendications précédentes, **caractérisé en ce que** le manchon souple (46) comprend au moins un tronçon en forme de soufflet.

## Patentansprüche

1. Anschlussvorrichtung, welche eine erste Leitung (32), eine zweite Leitung (34) und einen Verbindungsbereich (44) zwischen der ersten und der zweiten Leitung (32, 34) umfasst, wobei die Anschlussvorrichtung außerdem umfasst:
- eine flexible Muffe (46), welche ein erstes Ende (48), das dafür ausgelegt ist, einen Teil der ersten Leitung (32) zu bedecken, ein zweites Ende (50), das dafür ausgelegt ist, einen Teil der zweiten Leitung (34) zu bedecken, und eine erste Öffnung (58), die dafür ausgelegt ist, eine Verbindung des Inneren der flexiblen Muffe (46) mit der Außenseite herzustellen, aufweist,
- ein erstes Klemmsystem (52), das dafür ausgelegt ist, das erste Ende (48) der flexiblen Muffe (46) um die erste Leitung (32) herum festzuklemmen,
- ein zweites Klemmsystem (54), das dafür ausgelegt ist, das zweite Ende (50) der flexiblen Muffe (46) um die zweite Leitung (34) herum festzuklemmen,
- wobei das erste und das zweite Klemmsystem (52, 54) beiderseits des Verbindungsbereichs (44) angeordnet sind, und
- einen Füllanzeiger (56),
wobei die Vorrichtung **dadurch gekennzeichnet ist, dass** der Füllanzeiger (56) eine verformbare kreisförmige Wand (60) aufweist, welche die erste Öffnung (58) verschließt, wobei die verformbare kreisförmige Wand (60) zwischen einer inaktiven Position, in welcher die verformbare kreisförmige Wand (60) im Inneren der flexiblen Muffe (46) aufgenommen ist, und einer aktiven Position, in welcher die verformbare kreisförmige Wand (60) auf der Außenseite der flexiblen Muffe (46) ausgebreitet ist, beweglich ist.

2. Anschlussvorrichtung nach dem vorhergehenden Anspruch, **dadurch gekennzeichnet, dass** die erste Öffnung (58) auf einem Scheitelteil der flexiblen Muffe (46) positioniert ist.

3. Anschlussvorrichtung nach einem der Ansprüche 1 bis 2, **dadurch gekennzeichnet, dass** die verformbare kreisförmige Wand (60) und/oder eine Verbindung zwischen der verformbaren kreisförmigen Wand (60) und einem Rand der ersten Öffnung (58) einen mechanischen Widerstand aufweist, der so bemessen ist, dass sie im Falle einer starken Leckage birst.

4. Anschlussvorrichtung nach einem der vorhergehenden Ansprüche, **dadurch gekennzeichnet, dass** die flexible Muffe (46) eine zweite Öffnung (64), die dafür ausgelegt ist, eine Verbindung des Inneren der flexiblen Muffe (46) mit der Außenseite herzustellen, und im unteren Teil der flexiblen Muffe (46) positioniert ist, umfasst.

5. Anschlussvorrichtung nach dem vorhergehenden Anspruch, **dadurch gekennzeichnet, dass** die zweite Öffnung (64) von einem Entleerungssystem (66) verschlossen wird, das dafür ausgelegt ist, einen blockierten Zustand, in welchem es ein Fließen von Flüssigkeit durch die zweite Öffnung (64) hindurch verhindert, und einen Durchgangszustand, in welchem es ein Fließen von Flüssigkeit durch die zweite Öffnung (64) hindurch ermöglicht, einzunehmen.

6. Anschlussvorrichtung nach einem der vorhergehenden Ansprüche, **dadurch gekennzeichnet, dass** die flexible Muffe (46) wenigstens einen balgförmigen Abschnitt umfasst.

## Claims

1. Connection device comprising a first duct (32), a second duct (34), and an area (44) of joining between the first and second ducts (32, 34), the connection device also comprising:
- a flexible tube (46) which comprises a first end (48) configured to cover part of the first duct (32), and a second end (50) configured to cover part of the second duct (34) and a first orifice (58) which is configured to make the interior of the flexible tube (46) communicate with the exterior;
- a first clamping system (52) configured to clamp the first end (48) of the flexible tube (46) around the first duct (32);
- a second clamping system (54) configured to clamp the second end (50) of the flexible tube (46) around the second duct (34);
- the first and second clamping systems (52, 54) being arranged on both sides of the joining area (44), and
- a filling indicator (56),
the device being **characterized in that** the filling indicator (56) has a deformable circular wall (60) which closes the first orifice (58), said deformable circular wall (60) being mobile between an inactive position, in which the deformable circular wall (60) is accommodated inside the flexible tube (46), and an active position, in which the deformable circular wall (60) is deployed on the exterior of the flexible tube (46).

2. Connection device according to the preceding claim, **characterized in that** the first orifice (58) is positioned on a top part of the flexible tube (46).

3. Connection device according to either of Claims 1 and 2, **characterized in that** the deformable circular wall (60) and/or a connection between the deformable circular wall (60) and an edge of the first orifice (58) have mechanical resistance configured to break in the event of substantial leakage.

4. Connection device according to one of the preceding claims, **characterized in that** the flexible tube (46) comprises a second orifice (64) configured to make the interior of the flexible tube (46) communicate with the exterior, which orifice is positioned in the lower part of the flexible tube (46).

5. Connection device according to the preceding claim, **characterized in that** the second orifice (64) is closed by a drainage system (66) which is configured to occupy a blocked state in which it prevents flow of liquid through the second orifice (64), and a passing state in which it permits flow of liquid through the second orifice (64).

6. Connection device according to one of the preceding claims, **characterized in that** the flexible tube (46) comprises at least one section in the form of bellows.
